# EUROPÄISCHE PATENTSCHRIFT

(11) **EP 3 239 388 B1**
(45) Veröffentlichungstag und Bekanntmachung des Hinweises auf die Patenterteilung: **27.02.2019**
(21) Anmeldenummer: 17166557.3
(22) Anmeldetag: 13.04.2017
(51) Int. Cl.: D06F 58/20, D06F 25/00, D06F 39/00, D06F 58/28

(54) **WASCHTROCKNER**
WASHING AND DRYING MACHINE
MACHINE À LAVER ET SÉCHER

(30) Priorität: 28.04.2016 DE 102016107884
(43) Veröffentlichungstag der Anmeldung: 01.11.2017
(73) Patentinhaber: Miele & Cie. KG, 33332 Gütersloh (DE)
(72) Erfinder: Siepmann, Stefan, 33775 Versmold (DE); Witte, Olaf, 32758 Detmold (DE); Bau, Uwe, 52062 Aachen (DE); Erdogan, Meltem, 52072 Aachen (DE); Lanzerath, Franz, 52074 Aachen (DE); Bardow, André, 52070 Aachen (DE)

(56) Entgegenhaltungen:
- EP-A1- 3 091 117
- EP-A2- 2 110 473
- DE-A1-102012 223 485

## Beschreibung

Die Erfindung betrifft einen Waschtrockner. Ein Waschtrockner ist eine Kombination einer Waschmaschine mit einem Trockner in einem Gerät. Der Waschtrockner ist in der Lage, die Wäsche sowohl zu waschen als auch anschließend zu trocknen. In dem Waschtrockner finden daher sowohl Waschprozesse als auch Trocknungsprozesse zur Behandlung der Wäsche statt. Insbesondere betrifft die Erfindung einen Waschtrockner mit einem Laugenbehälter, in dem eine Wäschetrommel zur Aufnahme von Wäsche drehbar gelagert ist, einem Adsorptionsmodul, welches ein Adsorptionsmittel zum Aufnehmen von Feuchtigkeit enthält, einem Gebläse, welches zum Austausch von Prozessluft zwischen dem Laugenbehälter und dem Adsorptionsmodul ausgebildet ist, einer Steuervorrichtung, welche ausgebildet ist, während einer Trocknungsphase mittels des Gebläses trockene Prozessluft aus dem Adsorptionsmodul derart in den Laugenbehälter zu leiten, dass Feuchtigkeit aus der Wäsche an die Prozessluft abgegeben wird, und während einer Waschphase mittels des Gebläses feuchte Prozessluft aus dem Adsorptionsmodul derart in den Laugenbehälter zu leiten, dass Feuchtigkeit aus der Prozessluft an der Wäsche kondensiert und die Wäsche mittels in diesem Kondensationsprozess freigesetzter Kondensationswärme erwärmt wird, und einer Wärmepumpe, aufweisend einen Wärmepumpen-Verdampfer und einen Wärmepumpen-Kondensator.

Eine Anwendung der Trocknung mittels Adsorption im Bereich der Waschtrockner wird beispielsweise in EP 2 439 329 B1, EP 2 110 473 A2, DE 10 2012 223485 A1 und in DE 10 2007 031 481 A1 offenbart. Das Dokument EP 3 091 117 A1 ist relevant in Bezug auf Art. 54(3) EPÜ.

Der Wärmepumpen-Waschtrockner kann eine Kondensationstrocknung durchführen, bei der die Prozessluft im Kreis geführt wird: Kühle und feuchte Prozessluft wird mittels Wärmezufuhr auf eine höhere Temperatur gebracht, wobei die relative Feuchte sinkt und die Prozessluft bei Eintritt in die Wäschetrommel Wasser aufnehmen kann. In der Wäschetrommel nimmt die Prozessluft aus der nassen Wäsche verdunstendes Wasser auf und wird ausgeblasen. An dem Wärmepumpen-Kondensator wird die Prozessluft gekühlt, so dass Wasser aus der feuchten Prozessluft auskondensiert und abgeführt werden kann. Anschließend ist ein Durchlauf beendet und ein neuer Durchlauf wird begonnen, in dem die kühle Luft erneut auf eine hohe Temperatur gebracht wird usw. Dieser Prozess wird so lange im Kreis geführt, bis der gewünschte Trocknungsgrad erreicht wird. Mittels der Wärmepumpe kann in der Trocknungsphase Wärme rückgewonnen werden: Der vom Prozessluftstrom abgegebene Wärmestrom bei der Kondensation des Wassers wird mit Hilfe elektrischer Energie auf ein höheres Energieniveau gebracht und anschließend genutzt, um die Prozessluft vor der Wäschetrommel zu erhitzen. Dabei kann die über den Strom eingebrachte Exergie effizienter genutzt werden, als wenn der Strom direkt in Wärme umgewandelt werden würde.

In einem luft- oder wassergekühlten Waschtrockner wird die thermodynamische Performance weitgehend von dem Energieverbrauch des Trocknungssystems bestimmt. Der Energieverbrauch eines Trocknungsprozesses ist etwa viermal höher als der eines Waschprozesses des Waschtrockners. Erreichbaren Energieeffizienzvorteilen durch eine Wärmepumpen-Kondensationstrocknung mittels Wärmerückgewinnung im Trocknungsprozess steht eine signifikante Trocknungsdauerverlängerung aufgrund eines niedrigen Temperaturniveaus der Wärmepumpe entgegen. Die auf Wärmepumpentechnik basierende Trocknung besitzt eine relativ lange Programmlaufzeit und weist weiterhin relativ hohe Wärmeverluste auf.

Der Erfindung stellt sich somit das Problem, einen Waschtrockner bereitzustellen, der energieeffizient ist und relativ kurze Programmlaufzeiten im Trocknungsprozess anweist. Erfindungsgemäß wird dieses Problem durch einen Waschtrockner mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben Energieeffizienz darin, dass relativ niedrige Programm- insbesondere Trocknungsdauern erreichbar sind. Gleichzeitig können die Wäschetemperaturen relativ niedrig gehalten werden.

Die Erfindung basiert auf einer Reihenschaltung des Adsorptionsmoduls zwischen dem Wärmepumpen-Verdampfer und dem Wärmepumpen-Kondensator. Das Adsorptionsmodul hinter dem Wärmepumpen-Verdampfer in diesem Kreislauf erhält relativ niedrige Lufttemperaturen - da die niedrigsten Lufttemperaturen in dem gesamten Kreislauf hinter dem Wärmepumpen-Verdampfer vorliegen - und gleichzeitig eine relative Feuchtigkeit von 100% oder im Wesentlichen 100%. Die Bedingungen für das Adsorptionsmodul sind daher optimiert. Dadurch ist die erreichbare Gewichtsbeladung des Adsorptionsmoduls hoch. Zudem wird das Potenzial des Adsorptionsmoduls ausgenutzt, die Luft auch bei niedrigen absoluten Wasserbeladungen noch weiter zu trocknen, so dass das Adsorptionsmodul nicht für eine Aufgabe eingesetzt wird, die der Wärmepumpen-Verdampfer erfüllen kann. Zudem kann diese Reihenschaltung in einem Waschtrockner realisiert werden, der üblicherweise begrenzten Bauraum aufweist.

Der Waschtrockner umfasst den Laugenbehälter, in dem die Wäschetrommel drehbar gelagert ist, die Wärmepumpe mit dem Wärmepumpen-Verdampfer und dem Wärmepumpen-Kondensator, das Gebläse und das Adsorptionsmodul. Von dem Laugenbehälter führt eine Verdampferzulaufleitung zu dem Wärmepumpen-Verdampfer. Der Wärmepumpen-Verdampfer ist über eine Adsorberzulaufleitung mit dem Adsorptionsmodul und optional über eine Adsorberparallelzulaufleitung mit dem Wärmepumpen-Kondensator verbunden. Das Adsorptionsmodul ist weiterhin über eine Kondensatorzulaufleitung mit dem Wärmepumpen-Kondensator verbunden. Von dem Wärmepumpen-Kondensator führt eine Gebläsezulaufleitung zu dem Gebläse. Eine Laugenbehälterzulaufleitung verbindet das Gebläse mit dem Laugenbehälter. Bei den vorstehenden Leitungen kann es sich teilweise um Kanäle, Rohre oder Schläuche handeln. Mit dem Begriff der Leitung kann allerdings auch einfach ein irgendwie geartetes Gebilde gemeint sein, welches bewirkt, dass eine sich in den Leitungen befindende Prozessluft entlang eines gewünschten Pfades geleitet wird. Das Gebläse ist vorzugsweise derart ausgebildet, dass es bei Betrieb die Prozessluft aus dem Laugenbehälter in den Wärmepumpen-Verdampfer, anschließend ggf. in das Adsorptionsmodul, dann in den Wärmepumpen-Kondensator und anschließend wieder in den Laugenbehälter im Kreislauf leitet.

Eine Wärmepumpe weist üblicherweise einen Wärmepumpen-Verdampfer, einen Verdichter, einen Wärmepumpen-Kondensator und eine Drossel auf, wobei die Drossel und der Verdichter jeweils zwischen dem Wärmepumpen-Verdampfer und dem Wärmepumpen-Kondensator angeordnet sind, so dass ein Fluid im Kreislauf zwischen dem Wärmepumpen-Kondensator, der Drossel, dem Wärmepumpen-Verdampfer und dem Verdichter und durch die Bauteile verbindende Leitungen im Kreislauf geleitet werden kann. Beispielsweise ist der Wärmepumpen-Verdampfer über eine Wärmepumpen-Verdampferzulaufleitung mit der Drossel verbunden, die weiterhin über eine Wärmepumpen-Drosselzulaufleitung mit dem Wärmepumpen-Kondensator verbunden ist, während der Verdichter über eine Wärmepumpen-Verdichterzulaufleitung mit dem Wärmepumpen-Verdampfer und über eine Wärmepumpen-Kondensatorzulaufleitung mit dem Wärmepumpen-Kondensator verbunden ist.

Bei der Platzierung des Adsorptionsmoduls zwischen dem Wärmepumpen-Verdampfer und dem Wärmepumpen-Kondensator in Reihe besteht weiterhin die Möglichkeit, einen Teil der Prozessluft am Adsorptionsmodul vorbeizuleiten oder zur Deaktivierung des Adsorptionsmoduls auch die gesamte Prozessluft. Im Fall einer Parallelschaltung zu dem Adsorptionsmodul können ein Teil der Prozessluft durch das Adsorptionsmodul und ein weiterer Teil der Prozessluft durch die parallel geschaltete Komponente wie beispielsweise die Adsorberparallelzulaufleitung geführt werden.

Die Steuervorrichtung, die eine oder mehrere Steuereinrichtungen aufweisen kann, ist ausgebildet, die Komponenten des Waschtrockners zu steuern, so dass die Wasch- und Trocknungsprozesse der Wasch- und Trocknungsphasen entsprechend dargestellten Ausführungsformen durchgeführt werden.

Das Adsorptionsmodul enthält vorzugsweise maximal so viel Adsorptionsmittel, dass eine an die Wäsche abgebbare Gesamtkondensationswärme die für einen Normalwaschvorgang benötigte Waschenergie um nicht mehr als 20%, 10% oder 5% übersteigt, wobei die Gesamtkondensationswärme dann an die Wäsche abgegeben wird, wenn bei vollständig mit Feuchtigkeit beladenem Adsorptionsmittel die von dem Adsorptionsmittel adsorbierte Gesamtfeuchtigkeit aus dem Adsorptionsmittel vollständig desorbiert und an der Wäsche kondensiert wird.

Das Adsorptionsmodul ist in einer bevorzugten Ausführungsform daher derart ausgelegt, dass der Energieverbrauch eines Gesamtprozesses aus Waschphase und Trocknungsphase in dem Waschtrockner minimiert wird. Hierbei ist das Adsorptionsmodul nicht darauf ausgelegt, während der Trocknungsphase die gesamte in der Wäsche enthaltene Feuchtigkeit aufzunehmen. Stattdessen geht es darum, die beim Desorptionsvorgang anfallende überschüssige Energie möglichst vollständig in dem nachfolgenden Waschprozess einzubringen. Je nach gewähltem Trocknungsgrad und dem Feuchtegehalt der Wäsche kann das so ausgelegte Adsorptionsmodul aber durchaus ausreichen, um die gesamte Trocknungsphase ausschließlich mittels Adsorption zu betreiben. Der Waschtrockner weist eine Steuervorrichtung auf, welche ausgebildet ist, ein derartiges Verfahren durchzuführen.

Während der Desorption wird feuchte Prozessluft aus dem Adsorptionsmodul ausgetrieben und kondensiert in der Wäschetrommel aus. Diese Kondensationswärme wird für den Waschprozess genutzt und kann als Grenzwert gewählt werden. D.h., dann wird nur so viel desorbiert, wie anschließend während des Waschprozesses an Gesamtkondensationswärme genutzt werden kann. Bei einer bevorzugten Ausführungsform ist vorgesehen, dass die an die Wäsche abgebbare Gesamtkondensationswärme zwischen 500 Wattstunden und 900 Wattstunden liegt, vorzugsweise zwischen 600 Wattstunden und 850 Wattstunden, eher bevorzugt zwischen 700 Wattstunden und 800 Wattstunden.

Das Adsorptionsmodul wird während des Waschprozesses desorbiert, und adsorbiert während sich anschließender Trocknungsprozesse Feuchtigkeit aus der zirkulierenden Prozessluft. Zur Desorption ist vorzugsweise ein Luft-Elektroheizer an und/oder im Adsorptionsmodul vorgesehen.

Bei dem Adsorptionsmodul kann es sich um ein offenes Adsorptionssystem handeln, welches mit der Atmosphäre in direkter Verbindung steht. Hierbei erfolgen die Adsorption und die Desorption bei Umgebungsdruck. Alternativ kann es sich um ein geschlossenes Adsorptionssystem handeln, also um ein gegenüber der Umgebungsluft abgedichtetes System. Bei einem geschlossenen Adsorptionssystem kann der Arbeitsdruck frei gewählt werden.

Wenn zunächst von einem teilweise oder bereits vollständig entladenem Adsorptionsmodul ausgegangen wird, also von einem Adsorptionsmodul, bei dem das hierin enthaltene Adsorptionsmittel im Wesentlichen trocken ist, dann wird während der Trocknungsphase durch das Gebläse feuchte Prozessluft aus dem Laugenbehälter in das Adsorptionsmodul geblasen. Die Feuchtigkeit aus der Prozessluft wird von dem Adsorptionsmittel adsorbiert. Es handelt sich bei der Adsorption um einen exothermen Prozess, so dass die aufgrund des Adsorptionsvorgangs freigesetzte Wärmeenergie die Prozessluft erwärmt. Die aufgrund des Durchströmens des Adsorptionsmoduls trockene heiße Prozessluft wird mittels des Gebläses in den Laugenbehälter geleitet, wo er Feuchte aus der dort in der Wäschetrommel angeordneten Wäsche aufnimmt und die Wäsche so trocknet. Die nunmehr wieder feuchte Prozessluft wird dann im Sinne eines Kreislaufs wieder durch das Adsorptionsmodul geleitet, um das Adsorptionsmittel weiter zu beladen.

Der Trocknungsprozess kann derart weiter betrieben werden, bis das Adsorptionsmittel vollständig beladen ist, das bedeutet, bis das Adsorptionsmittel bei gegebenem Prozessdruck keine weitere Feuchtigkeit mehr aufnehmen kann. Dies erfolgt in Abhängigkeit vom Adsorptionsmittel üblicherweise bei einer Beladung des Adsorptionsmittels zwischen 20% und 40%. Wenn die Wäsche dann noch nicht ausreichend trocken ist, kann mittels eines konventionellen Trocknungsprozesses die Wäschetrocknung weiter betrieben werden. Hierbei ist der Einsatz einer Wärmepumpe weiterhin von Vorteil.

Vorzugsweise wird das Adsorptionsmodul in der Trocknungsphase jedoch gleichzeitig mit der Wärmepumpe betrieben. Dies hat den Vorteil, dass der Trocknungsprozess schneller ablaufen kann. In diesem Fall wird mittels des Wärmepumpen-Verdampfers der Hauptanteil an Feuchtigkeit aus der aus dem Laugenbehälter tretenden Prozessluft entzogen, und das Adsorptionsmodul dient dazu, die Restfeuchte aus der Prozessluft zu entnehmen, welche aus dem Wärmepumpen-Verdampfer austritt. Zudem kann der Prozess so abgestimmt sein, dass das Adsorptionsmittel in dem Adsorptionsmodul erst mit dem Ende der Trocknungsphase oder sogar mit dem Ende zweier nacheinander folgender Trocknungsphasen vollständig beladen ist.

Alternativ kann das Adsorptionsmodul auch zeitweise oder intervallmäßig in der Trocknungsphase betrieben werden. Insbesondere kann ein Boostbetrieb vorgesehen sein, bei dem das Adsorptionsmodul nach der Hälfte oder gegen Ende einer Trocknungsphase zugeschaltet wird, um den Trocknungsvorgang sprunghaft zu beschleunigen.

In einer bevorzugten Ausführungsform ist das Adsorptionsmodul zwischen dem Wärmepumpen-Kondensator und dem Wärmepumpen-Verdampfer in Reihe geschaltet, so dass die aus dem Laugenbehälter herausströmende Prozessluft durch den Wärmepumpen-Verdampfer, danach durch das Adsorptionsmodul und danach durch das Wärmepumpen-Kondensator strömt, bevor es wieder in den Laugenbehälter geleitet wird. Die in den Wärmepumpen-Verdampfer eintretende Luft kommt direkt aus dem Laugenbehälter bzw. der darin angeordneten Wäschetrommel, so dass die Wärmepumpe vom großen Potenzial zur Latentwärmerückgewinnung profitieren kann.

Vorzugsweise ist die Steuervorrichtung ausgebildet, während einer Trocknungsphase mittels des Gebläses trockene Prozessluft aus dem Adsorptionsmodul derart in den Laugenbehälter zu leiten, dass 80% Adsorberkapazität zu Beginn der Trocknungsphase und 20% Adsorberkapazität am Ende der Trocknungsphase eingesetzt werden. Vorzugsweise ist die Steuervorrichtung weiterhin ausgebildet, dabei den gesamten Prozessluftstrom durch das Adsorptionsmodul zu leiten. Aufgrund des üblicherweise kleineren Fassungsvermögens der Wäschetrommel eines Waschtrockners im Vergleich zu einem eigenständigen Trockner, wird eine Waschladung an Wäsche nach der Waschphase in der Regel auf zwei Trocknungsprozesse in der Trocknungsphase verteilt.

Während der Waschphase wird das Adsorptionsmodul desorbiert und während der beiden sich anschließenden Trocknungsprozesse adsorbiert das Adsorptionsmodul Feuchtigkeit aus der zirkulierenden Prozessluft. Am Anfang der Trocknungsphase liegen niedrige Temperaturen vor, was vorteilhaft für das Adsorptionsmodul ist. Gleichzeitig verläuft die Trocknung am Anfang mit relativ niedriger Geschwindigkeit. Am Ende der Trocknungsphase verschlechtert sich der Stoffübergang der Wäschetrommel von der feuchten Wäsche an die Prozessluft. Die Trocknungsgeschwindigkeit und relative Feuchtigkeit am Ausgang der Wäschetrommel nehmen wieder ab. Das Adsorptionsmodul kann der Verlangsamung der Trocknung entgegenwirken, indem Prozessluft mit relativ geringer Feuchte bereitgestellt und so die nutzbare Beladungsbreite der Prozessluft vergrößert wird. Der Einsatz des Adsorptionsmoduls am Anfang und am Ende der Trocknungsphase kombiniert die Vorteile des Einsatzes am Anfang und am Ende, so dass diese Phasen langsamer Trocknung durch das Adsorptionsmodul zumindest teilweise beschleunigt werden.

In einer bevorzugten Ausführungsform ist die Steuereinrichtung ausgebildet, den Wärmepumpen-Verdampfer und den Wärmepumpen-Kondensator am Ende der Trocknungsphase oder während der gesamten Trocknungsphase zu aktivieren.

Vorzugsweise ist die Steuervorrichtung ausgebildet, den Wärmepumpen-Verdampfer und den Wärmepumpen-Kondensator während der gesamten Trocknungsphase zu aktivieren und während der Trocknungsphase mittels des Gebläses trockene Prozessluft aus dem Adsorptionsmodul derart in den Laugenbehälter zu leiten, dass 80% Adsorberkapazität zu Beginn der Trocknungsphase und 20% Adsorberkapazität am Ende der Trocknungsphase eingesetzt werden. Dadurch die Zeitdauer der Trocknungsphase weiterhin reduziert werden. Ferner kann der Energieaufwand weiterhin verringert werden.

Bei der Auslegung des Waschtrockners auf die Waschphase kann ein Großteil der Desorptionsenergie doppelt genutzt werden. Zur weiteren Reduzierung des Energieaufwands zur Desorption oder zur weiteren Verkürzung der Trocknungsphase mittels Einsetzen eines größeren während der gesamten Trocknungsphase aktiv bleibendes Adsorptionsmoduls können Überschussmengen an Desorptionsenergie auftreten, die nicht mehr für den Waschprozess eingesetzt werden können. Der Energiebedarf kann gesenkt werden, wenn die Wärmepumpe zumindest teilweise während der Desorption eingesetzt wird. Zur Desorption wird dem Adsorptionsmodul trockene warme Prozessluft zugeführt, die im Adsorptionsmodul Wasserdampf aufnimmt und aus dem Adsorptionsmodul mit höherer Wasserbeladung aber niedrigerer Temperatur als beim Eintritt in das Adsorptionsmodul austritt. Zur Nutzung der im Wärmepumpen-Kondensator übertragenen Wärme zur Desorption ist das Adsorptionsmodul vorzugsweise im Kreislauf hinter dem Wärmepumpen-Kondensator angeordnet. Dies lässt sich durch eine Prozessluftumkehr im System oder eine Umkehrung der Wärmepumpenfunktionalität realisieren.

In einer bevorzugten Ausführungsform ist das Gebläse drehbar ausgebildet. Dadurch kann eine Prozessluftumkehr im System realisiert werden. Die Prozessluftrichtung ist durch das drehbare Gebläse adaptierbar. Vorzugsweise ist weiterhin ein Heizelement zwischen dem Wärmepumpen-Kondensator und dem Adsorptionsmodul in Reihe geschaltet. Das Gebläse ist vorzugsweise derart drehbar ausgebildet, dass es bei Betrieb die Prozessluft aus dem Laugenbehälter in den Wärmepumpen-Verdampfer, anschließend ggf. in das Adsorptionsmodul, dann in den Wärmepumpen-Kondensator und anschließend wieder in den Laugenbehälter im Kreislauf leitet oder in umgekehrter Richtung, d.h., aus dem Laugenbehälter in den Wärmepumpen-Kondensator, anschließend ggf. in das optionale Heizelement, und dann ggf. in das Adsorptionsmodul, dann in den Wärmepumpen-Verdampfer und anschließend wieder in den Laugenbehälter im Kreislauf leitet, wobei das Leiten der Prozessluft in umgekehrter Richtung besonders bei der Desorption, wie vorstehend ausgeführt, während einer Waschphase vorteilhaft ist. Das Heizelement kann bei zur Unterstützung der Desorption aus dem Wärmepumpen-Kondensator austretende und in das Adsorptionsmodul eintretende Prozessluft weiterhin vor ihrem Eintritt in das Adsorptionsmodul erwärmen.

In einer weiteren bevorzugten Ausführungsform weist die Wärmepumpe weiterhin Ventile auf, so dass ihre Funktionalität umkehrbar ausgebildet ist. Die Integration von insgesamt drei Ventilen ist ausreichend. Beispielsweise ist der Verdichter der Wärmepumpe über eine sich verzweigende und die Ventile aufweisende Leitung mit dem Wärmepumpen-Verdampfer und dem Wärmepumpen-Kondensator verbunden, so dass die Wärmepumpen-Funktionalität umgekehrt werden kann. Beispielsweise ist der Wärmepumpen-Verdampfer über eine Wärmepumpen-Verdampferzulaufleitung mit der Drossel verbunden, die weiterhin über eine Wärmepumpen-Drosselzulaufleitung mit dem Wärmepumpen-Kondensator verbunden ist. Der Verdichter ist über eine Wärmepumpen-Verdichterzulaufleitung, eine Wärmepumpen-Kondensatorzulaufleitung, eine Wärmepumpen-Ventilzulaufleitung, eine weitere Wärmepumpen-Ventilzulaufleitung und darin integrierte Ventile mit dem Wärmepumpen-Verdampfer und dem Wärmepumpen-Kondensator verbunden.

Durch entsprechendes Schalten und/oder Aktivieren der Ventile kann die Funktionalität der Wärmepumpe umgekehrt werden, so dass der Wärmepumpen-Verdampfer als Verdampfer oder als Kondensator wirken kann, während der Wärmepumpen-Kondensator als Kondensator oder Verdampfer wirken kann. In einer bevorzugten Ausführungsform ist weiterhin ein Heizelement zwischen dem Wärmepumpen-Verdampfer und dem Adsorptionsmodul in Reihe geschaltet. Dadurch kann bei umgekehrter Wärmepumpenfunktionalität, d.h., wenn der Wärmepumpen-Verdampfer als Kondensator wirkt und der Wärmepumpen-Kondensator als Verdampfer wirkt, aus dem als Kondensator wirkenden Wärmepumpen-Verdampfer austretende Prozessluft vor ihrem Eintritt in das Adsorptionsmodul weiterhin erwärmt werden.

Sowohl mit dem drehbaren Gebläse als auch mit der Ventile aufweisenden Wärmepumpe mit umkehrbarer Funktionalität kann die Desorption mit weiterhin verbesserter Energieeffizienz durchgeführt werden. Die Desorptionsabwärme wird effizient genutzt.

In einer bevorzugten Ausführungsform weist der Waschtrockner weiterhin einen Wäschetrommel-Bypass auf. Dadurch können Wärmeverluste weiterhin minimiert werden.

Bei einer bevorzugten Ausführungsform ist vorgesehen, dass die von dem Adsorptionsmittel adsorbierbare Gesamtfeuchtigkeit bei vollständig mit Feuchtigkeit beladenem Adsorptionsmittel einer Beladung des Adsorptionsmittels zwischen 20% und 45% entspricht, vorzugsweise zwischen 25% und 35% oder zwischen 30% und 40%. In diesem, auch als Zustand maximaler Beladung bezeichneten Zustand, besitzt das Adsorbat, also die adsorbierte Feuchtigkeit die gleiche molare freie Enthalpie wie die freie Flüssigkeit, also das noch nicht adsorbierte Adsorptiv, welches das Adsorptionsmittel umgibt. Die Beladung ist definiert als Massenverhältnis zwischen dem Adsorbat, also der adsorbierten Feuchtigkeit, und dem Adsorptionsmittel oder Adsorbens. Bei Zeolith liegt die Maximalbeladung um etwa 30%, während sie bei Silikagel bei etwa 35-40% liegt.

In einer vorteilhaften Weiterbildung ist vorgesehen, dass der Normalwaschvorgang einem Standard-Waschgang bei einer Waschtemperatur von 60°C und einer Wäschebeladung von 5,5 kg Wäsche entspricht. Wenn der Waschtrockner eine Wäschetrommel mit größerem Fassungsvermögen aufweist, dann ist es vorteilhaft, wenn der Normalwaschvorgang einem Standard-Waschgang bei einer Wäschebeladung in Höhe des Fassungsvermögens entspricht. Beispielsweise kann der Normalwaschvorgang einem Standard-Waschgang bei einer Waschtemperatur von 60°C und einer Wäschebeladung von 6 kg, 6,5 kg, 7 kg oder 8 kg Wäsche entsprechen.

Gemäß einer bevorzugten Weiterbildung ist vorgesehen, dass das Adsorptionsmodul zwischen 2kg und 7kg Adsorptionsmittel enthält, vorzugsweise zwischen 2,5kg und 4,5kg oder zwischen 4,5kg und 6,5kg, bevorzugter zwischen 3kg und 4kg oder zwischen 5kg und 6kg.

Bei einer zweckmäßigen Ausführungsform ist vorgesehen, dass das Adsorptionsmodul als Adsorptionsmittel ein Silikagel, auch Kieselgel genannt, und/oder ein Zeolith enthält. Dem Silikagel sind vorzugsweise Salze eingebunden, beispielsweise Calciumchloridhexahydrat, um als Adsorptionsmittel ein sogenanntes Selective Water Sorbens (SWS) zu erhalten. In jedem Fall kann das Adsorptionsmittel in Form einer Schüttung in einem Festbettreaktor vorliegen.

In einer bevorzugten Ausführungsform weist das Adsorptionsmodul ein Silikagel als Adsorptionsmittel auf. Geeignete Silikagele sind beispielsweise Silikagel 125, Silikagel 127, Sylobead® SG B 125, Sylobead® SG B 127, Sylobead® SG H 127, beispielsweise erhältlich bei W. R. Grace & Co.-Conn., Columbia (Maryland), USA, ART SORB, Silikagel M, Silikagel E, PRO SORB, beispielsweise erhältlich bei Long Life for Art, Eichstetten, Deutschland.

In einer alternativen Ausführungsform, die nicht unter die Ansprüche fällt, wird ein Verfahren zum Betreiben eines Waschtrockners mit einem Laugenbehälter, in dem eine Wäschetrommel zur Aufnahme von Wäsche drehbar gelagert ist, einem Adsorptionsmodul, welches ein Adsorptionsmittel zum Aufnehmen von Feuchtigkeit enthält, einem Gebläse, welches zum Austausch von Prozessluft zwischen dem Laugenbehälter und dem Adsorptionsmodul ausgebildet ist, einer Wärmepumpe aufweisend einen Wärmepumpen-Verdampfer und einen Wärmepumpen-Kondensator, wobei das Adsorptionsmodul zwischen dem Wärmepumpen-Verdampfer und dem Wärmepumpen-Kondensator in Reihe geschaltet ist, wobei das Verfahren ausgebildet ist, während einer Trocknungsphase mittels des Gebläses trockene Prozessluft aus dem Adsorptionsmodul derart in den Laugenbehälter zu leiten, dass Feuchtigkeit aus der Wäsche an die Prozessluft abgegeben wird, und während einer Waschphase mittels des Gebläses feuchte Prozessluft aus dem Adsorptionsmodul derart in den Laugenbehälter zu leiten, dass Feuchtigkeit aus der Prozessluft an der Wäsche kondensiert und die Wäsche mittels in diesem Kondensationsprozess freigesetzter Kondensationswärme erwärmt wird, wobei während der Waschphase und / oder während der Trocknungsphase die aus dem Laugenbehälter herausströmende Prozessluft durch den Wärmepumpen-Verdampfer, danach durch das Adsorptionsmodul und danach durch den Wärmepumpen-Kondensator strömt, bevor sie wieder in den Laugenbehälter geleitet wird, offenbart.

Das Verfahren kann alternativ derart ausgebildet sein, dass die aus dem Laugenbehälter herausströmende Prozessluft durch den Wärmepumpen-Kondensator, danach durch das Adsorptionsmodul und danach durch den Wärmepumpen-Verdampfer strömt. Diese Verfahrensvariante ist insbesondere vorteilhaft, wenn das Adsorptionsmodul während einer Waschphase desorbiert wird.

In einer bevorzugten Ausführungsform des Verfahrens werden 80% Adsorberkapazität zu Beginn der Trocknungsphase und 20% Adsorberkapazität am Ende der Trocknungsphase eingesetzt. Vorzugsweise wird der gesamte Prozessluftstrom durch das Adsorptionsmodul geleitet.

Vorzugsweise sind bzw. werden der Wärmepumpen-Verdampfer und der Wärmepumpen-Kondensator, die Wärmepumpe, am Ende der Trocknungsphase oder während der gesamten Trocknungsphase aktiviert.

In einer bevorzugten Verfahrensvariante sind der Wärmepumpen-Verdampfer und der Wärmepumpen-Kondensator während der gesamten Trocknungsphase aktiviert und werden 80% Adsorberkapazität zu Beginn der Trocknungsphase und 20% Adsorberkapazität am Ende der Trocknungsphase eingesetzt. Vorzugsweise wird dabei der gesamte Prozessluftstrom durch das Adsorptionsmodul geleitet.

Ein Ausführungsbeispiel der Erfindung ist in den Zeichnungen rein schematisch dargestellt und wird nachfolgend näher beschrieben. Es zeigt
- Fig. 1: eine schematische Darstellung eines erfindungsgemäßen Waschtrockners gemäß einer ersten Ausführungsform;
- Fig. 2: eine schematische Darstellung eines erfindungsgemäßen Waschtrockners gemäß einer zweiten Ausführungsform; und
- Fig. 3: eine schematische Darstellung eines erfindungsgemäßen Waschtrockners gemäß einer dritten Ausführungsform.

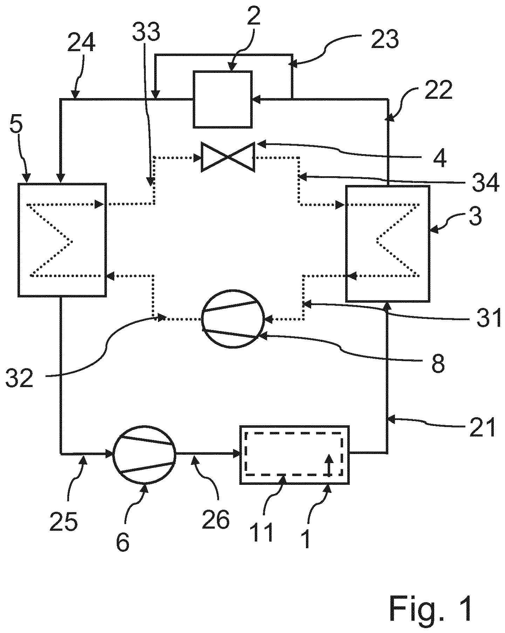

Fig. 1 zeigt eine schematische Darstellung eines erfindungsgemäßen Waschtrockners gemäß einer ersten Ausführungsform. In der Fig. 1 ist eine erste Ausführungsform eines erfindungsgemäßen Waschtrockners anhand eines Flussdiagramms schematisch dargestellt. Der Waschtrockner umfasst einen Laugenbehälter 1, in dem die Wäschetrommel 11 drehbar gelagert ist, eine Wärmepumpe mit einem Wärmepumpen-Verdampfer 3 und einem Wärmepumpen-Kondensator 5, ein Gebläse 6 und ein Adsorptionsmodul 2, welches mit einem Adsorptionsmittel (nicht gezeigt) gefüllt ist. Von dem Laugenbehälter 1 führt eine Verdampferzulaufleitung 21 zu dem Wärmepumpen-Verdampfer 3. Der Wärmepumpen-Verdampfer 3 ist über eine Adsorberzulaufleitung 22 mit dem Adsorptionsmodul 2 und über eine Adsorberparallelzulaufleitung 23 mit dem Wärmepumpen-Kondensator 5 verbunden. Das Adsorptionsmodul 2 ist weiterhin über eine Kondensatorzulaufleitung 24 mit dem Wärmepumpen-Kondensator 5 verbunden. Der Wärmepumpen-Verdampfer 3 ist daher über die Adsorberparallelzulaufleitung 23 direkt und über die Adsorber- und Kondensatorzulaufleitungen 22, 24 über das Adsorptionsmodul 2 mit dem Wärmepumpen-Kondensator 5 verbunden.

Von dem Wärmepumpen-Kondensator 5 führt eine Gebläsezulaufleitung 25 zu dem Gebläse 6. Das Gebläse 6 ist über eine Laugenbehälterzulaufleitung 26 mit dem Laugenbehälter 1 verbunden. Bei diesen Leitungen 21 bis 26 kann es sich teilweise um Kanäle, Rohre oder Schläuche handeln. Mit dem Begriff der Leitung kann allerdings auch einfach ein irgendwie geartetes Gebilde gemeint sein, welches bewirkt, dass eine sich in den Leitungen befindende Prozessluft (nicht gezeigt) entlang eines gewünschten Pfades, der durch die an den Leitungen gezeigten Pfeilrichtungen vorgegeben ist zu der jeweiligen Komponente 1, 2, 3, 5 des Waschtrockners geleitet wird.

Die Wärmepumpe weist neben dem Wärmepumpen-Verdampfer 3 und dem Wärmepumpen-Kondensator 5 eine Drossel 4 und einen Verdichter 8 auf. Der Wärmepumpen-Verdampfer 3 ist mit dem Verdichter 8 über eine Wärmepumpen-Verdichterzulaufleitung 31 verbunden. Der Verdichter 8 ist über eine Wärmepumpen-Kondensatorzulaufleitung 32 mit dem Wärmepumpen-Kondensator 5 verbunden, der über eine Wärmepumpen-Drosselzulaufleitung 33 mit der Drossel 4 verbunden ist. Die Drossel 4 ist über eine Wärmepumpen-Verdampferzulaufleitung 34 mit dem Wärmepumpen-Verdampfer 3 verbunden. Ein Fluid kann durch das vorstehend beschriebene Leitungssystem entlang eines gewünschten Pfades, der durch die an den Leitungen gezeigten Pfeilrichtungen vorgegeben ist, zu den Komponenten 3, 5, 4, 8 im Kreislauf geleitet werden. Die Leitungen 31 bis 34 dieses Kreislaufs sind gestrichelt gezeigt, um diesen Kreislauf von dem durch die Leitungen 21 bis 26 und die Komponenten 1, 2, 3, 5, 6 gebildeten Kreislauf zu unterscheiden. Beide Kreisläufe sind unabhängig voneinander d.h. die Prozessluft und das in der Wärmepumpe zirkulierende Fluid können nicht von einem Kreislauf in den anderen wechseln.

In dem Laugenbehälter 1 ist die Wäschetrommel 11 zur Aufnahme von Wäsche (nicht gezeigt) drehbar gelagert. Die Wäsche kann in dem Waschtrockner gewaschen und anschließend getrocknet werden. Das Adsorptionsmodul 2 weist ein Adsorptionsmittel zum Aufnehmen von Feuchtigkeit auf. Zur Desorption ein Luft-Elektroheizer (nicht gezeigt) vorgesehen. Das Gebläse 6 ist ausgebildet, Prozessluft zwischen dem Laugenbehälter 1 und dem Adsorptionsmodul 2 auszutauschen. Bei Aktivierung bläst das Gebläse 6 die Prozessluft in die durch die Pfeile an den Zulaufleitungen 21 bis 26 angedeutete Richtung. Das Adsorptionsmodul 2 ist zwischen dem Wärmepumpen-Verdampfer 3 und dem Wärmepumpen-Kondensator 5 in Reihe geschaltet.

Bei Betrieb wird während einer Trocknungsphase mittels des Gebläses 6 trockene Prozessluft aus dem Adsorptionsmodul 2 derart in den Laugenbehälter 1 geleitet, dass Feuchtigkeit aus der Wäsche an die Prozessluft abgegeben wird. Während einer Waschphase wird mittels des Gebläses 6 feuchte Prozessluft aus dem Adsorptionsmodul 2 derart in den Laugenbehälter 1 geleitet, dass Feuchtigkeit aus der Prozessluft an der Wäsche kondensiert und die Wäsche mittels in diesem Kondensationsprozess freigesetzter Kondensationswärme erwärmt wird. Während der Waschphase und / oder während der Trocknungsphase strömt die aus dem Laugenbehälter 1 herausströmende Prozessluft durch den Wärmepumpen-Verdampfer 3, danach durch das Adsorptionsmodul 2 und danach durch den Wärmepumpen-Kondensator 5, bevor sie wieder in den Laugenbehälter 1 geleitet wird.

Bei Aktivierung der Wärmepumpe zirkuliert ein Fluid durch die Komponenten 3, 4, 5, 8 und die Zulaufleitungen 31 bis 34 in die an den Zulaufleitungen 31 bis 34 angegebene Pfeilrichtung.

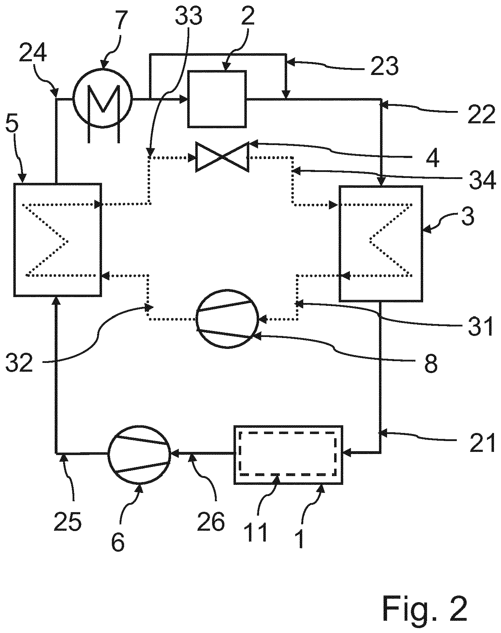

Fig. 2 zeigt eine schematische Darstellung eines erfindungsgemäßen Waschtrockners gemäß einer zweiten Ausführungsform. In der Fig. 2 ist eine zweite Ausführungsform eines erfindungsgemäßen Waschtrockners anhand eines Flussdiagramms schematisch dargestellt. Der in Fig. 2 gezeigte Waschtrockner entspricht dem in Fig. 1 gezeigten Waschtrockner mit dem Unterschied, dass das Gebläse 6 drehbar ausbildet ist. Das Gebläse 6 kann in einer Drehrichtung die Prozessluft in die in Fig. 1 durch die Pfeile an den Zulaufleitungen 21 bis 26 angedeutete Richtung strömen lassen, so dass mittels des Gebläses 6 während der Waschphase und / oder während der Trocknungsphase die aus dem Laugenbehälter 1 herausströmende Prozessluft durch den Wärmepumpen-Verdampfer 3, danach durch das Adsorptionsmodul 2 und danach durch den Wärmepumpen-Kondensator 5 strömt, bevor sie wieder in den Laugenbehälter 1 geleitet wird. In einer weiteren Drehrichtung kann das Gebläse 6 die Prozessluft in die in Fig. 2 durch die Pfeile an den Zulaufleitungen 21 bis 26 angedeutete Richtung strömen lassen, so dass mittels des Gebläses 6 während der Waschphase und / oder während der Trocknungsphase vorzugsweise während der Waschphase die aus dem Laugenbehälter 1 herausströmende Prozessluft durch den Wärmepumpen-Kondensator 5, danach durch das Adsorptionsmodul 2 und danach durch den Wärmepumpen-Verdampfer 3 strömt, bevor sie wieder in den Laugenbehälter 1 geleitet wird. Der Wärmepumpen-Kreislauf, der mit Hilfe der Zulaufleitungen 31 bis 34 gebildet wird, bleibt davon unberührt. Weiterhin kann der in Fig. 2 gezeigte Waschtrockner ein optionales Heizelement 7 aufweisen, das zwischen dem Wärmepumpen-Kondensator 5 und dem Adsorptionsmodul 2 in der Kondensatorzulaufleitung 24 angeordnet ist. Das Heizelement 7 dient dazu, in der in Fig. 2 gezeigten Drehrichtung des Gebläses 6 aus dem Wärmepumpen-Kondensator 5 austretende Prozessluft vor ihrem Eintritt in das Adsorptionsmodul 2 zu erwärmen.

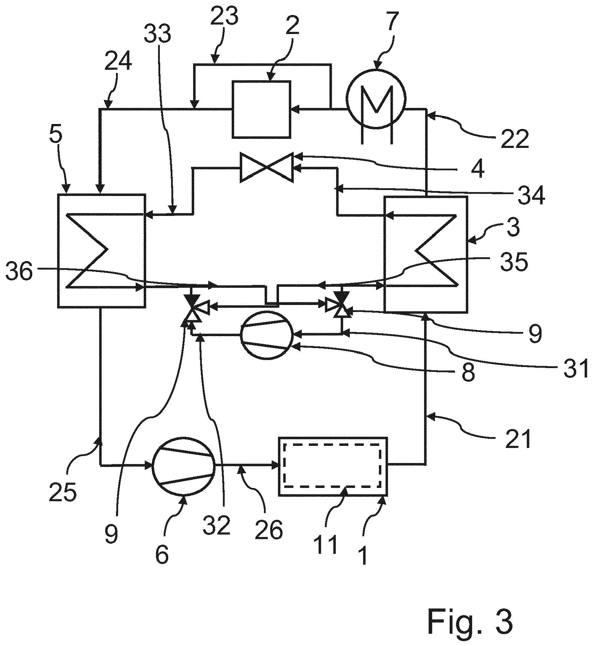

Fig. 3 zeigt eine schematische Darstellung eines erfindungsgemäßen Waschtrockners gemäß einer dritten Ausführungsform. In der Fig. 3 ist eine zweite Ausführungsform eines erfindungsgemäßen Waschtrockners anhand eines Flussdiagramms schematisch dargestellt. Der in Fig. 3 gezeigte Waschtrockner entspricht dem in Fig. 1 gezeigten Waschtrockner mit dem Unterschied, dass die Wärmepumpe derart ausgelegt ist, so dass ihre Funktionalität umkehrbar ausgebildet ist. Der Wärmepumpen-Verdampfer 3 ist über die Wärmepumpen-Verdampferzulaufleitung 34 mit der Drossel 4 verbunden, die weiterhin über die Wärmepumpen-Drosselzulaufleitung 33 mit dem Wärmepumpen-Kondensator 5 verbunden ist. Der Verdichter 8 ist über die Wärmepumpen-Verdichterzulaufleitung 31, die Wärmepumpen-Kondensatorzulaufleitung 32, eine Wärmepumpen-Ventilzulaufleitung 35, eine weitere Wärmepumpen-Ventilzulaufleitung 36 und Ventile 9 mit dem Wärmepumpen-Verdampfer 3 und dem Wärmepumpen-Kondensator 5 verbunden.

Durch entsprechendes Schalten und/oder Aktivieren der Ventile 9 kann die Funktionalität der Wärmepumpe umgekehrt werden, so dass der Wärmepumpen-Verdampfer 3 als Verdampfer oder als Kondensator wirken kann, während der Wärmepumpen-Kondensator als Kondensator oder Verdampfer wirken kann. In der in Fig. 3 durch die Pfeilrichtungen der Zuleitungen 33 bis 36 angedeutete Strömrichtung eines Fluids durch diese Leitungen wirkt der Wärmepumpen-Verdampfer 3 als Kondensator und der Wärmepumpen-Kondensator 5 als Verdampfer bei Betrieb. Wie erwähnt, kann die Strömrichtung des in der Wärmepumpen zirkulierenden Fluids durch Schalten der Ventile 9 umgekehrt werden, so dass das Fluid bei Betrieb durch die Leitungen 31 bis 34 in der durch die Pfeile der Zulaufleitungen 31, 32 angedeutete Pfeilrichtung strömt und der Wärmepumpen-Verdampfer 3 als Verdampfer wirkt, während der Wärmepumpen-Kondensator 5 als Kondensator wirkt.

Weiterhin kann der in Fig. 3 gezeigte Waschtrockner ein optionales Heizelement 7 aufweisen, das zwischen dem Wärmepumpen-Verdampfer 3 und dem Adsorptionsmodul 2 in der Adsorberzulaufleitung 22 angeordnet ist. Das Heizelement 7 dient dazu, in der in Fig. 3 gezeigten Wärmepumpenfunktonalität, in der der Wärmepumpen-Verdampfer 3 die Funktionalität des Kondensators aufweist und der Wärmepumpen-Kondensator 5 die Funktionalität des Verdampfers aufweist, aus dem Wärmepumpen-Verdampfer 3 in Funktion als Kondensator austretende Prozessluft vor ihrem Eintritt in das Adsorptionsmodul 2 zu erwärmen.

### Bezugszeichenliste

- 1: Laugenbehälter
- 11: Wäschetrommel
- 2: Adsorptionsmodul
- 3: Wärmepumpen-Verdampfer
- 4: Drossel
- 5: Wärmepumpen-Kondensator
- 6: Gebläse
- 7: Heizelement
- 8: Verdichter
- 9: Ventil
- 21: Verdampferzulaufleitung
- 22: Adsorberzulaufleitung
- 23: Adsorberparallellzulaufleitung
- 24: Verdampferzulaufleitung
- 25: Gebläsezulaufleitung
- 26: Laugenbehälterzulaufleitung
- 31: Wärmepumpen-Verdichterzulaufleitung
- 32: Wärmepumpen-Kondensatorzulaufleitung
- 33: Wärmepumpen-Drosselzulaufleitung
- 34: Wärmepumpen-Verdampferzulaufleitung
- 35: Wärmepumpen-Ventilzulaufleitung
- 36: weitere Wärmepumpen-Ventilzulaufleitung

## Patentansprüche

1. Waschtrockner mit einem Laugenbehälter (1), in dem eine Wäschetrommel (11) zur Aufnahme von Wäsche drehbar gelagert ist, einem Adsorptionsmodul (2), welches ein Adsorptionsmittel zum Aufnehmen von Feuchtigkeit enthält, einem Gebläse (6), welches zum Austausch von Prozessluft zwischen dem Laugenbehälter (1) und dem Adsorptionsmodul (2) ausgebildet ist, einer Steuervorrichtung, welche ausgebildet ist, während einer Trocknungsphase mittels des Gebläses (6) trockene Prozessluft aus dem Adsorptionsmodul (2) derart in den Laugenbehälter (1) zu leiten, dass Feuchtigkeit aus der Wäsche an die Prozessluft abgegeben wird, und während einer Waschphase mittels des Gebläses (6) feuchte Prozessluft aus dem Adsorptionsmodul (2) derart in den Laugenbehälter (1) zu leiten, dass Feuchtigkeit aus der Prozessluft an der Wäsche kondensiert und die Wäsche mittels in diesem Kondensationsprozess freigesetzter Kondensationswärme erwärmt wird, und einer Wärmepumpe, aufweisend einen Wärmepumpen-Verdampfer (3) und einen Wärmepumpen-Kondensator (5), wobei das Adsorptionsmodul (2) und der Wärmepumpen-Verdampfer (3) und der Wärmepumpen-Kondensator (5) in Reihe geschaltet sind,
**dadurch gekennzeichnet,**
**dass** die Wärmepumpe weiterhin Ventile (9) aufweist, so dass ihre Funktionalität umkehrbar ausgebildet ist, so dass durch entsprechendes Schalten und/oder Aktivieren der Ventile der Wärmepumpen-Verdampfer (3) als Verdampfer oder als Kondensator wirken kann, während der Wärmepumpen-Kondensator (5) als Kondensator oder Verdampfer wirken kann.

2. Waschtrockner nach Anspruch 1, **dadurch gekennzeichnet, dass** das Adsorptionsmodul (2) zwischen dem Wärmepumpen-Kondensator (5) und dem Wärmepumpen-Verdampfer (3) in Reihe geschaltet ist, so dass die aus dem Laugenbehälter (1) herausströmende Prozessluft durch den Wärmepumpen-Verdampfer (3), danach durch das Adsorptionsmodul (2) und danach durch das Wärmepumpen-Kondensator (5) strömt, bevor es wieder in den Laugenbehälter (1) geleitet wird.

3. Waschtrockner nach Anspruch 1 oder 2, **dadurch gekennzeichnet, dass** die Steuervorrichtung ausgebildet ist, während der Trocknungsphase mittels des Gebläses (6) trockene Prozessluft aus dem Adsorptionsmodul (2) derart in den Laugenbehälter (1) zu leiten, dass 80% Adsorberkapazität zu Beginn der Trocknungsphase und 20% Adsorberkapazität am Ende der Trocknungsphase eingesetzt werden.

4. Waschtrockner nach einem der Ansprüche 1 bis 3, **dadurch gekennzeichnet, dass** die Steuereinrichtung ausgebildet ist, den Wärmepumpen-Verdampfer (3) und den Wärmepumpen-Kondensator (5) am Ende der Trocknungsphase oder während der gesamten Trocknungsphase zu aktivieren.

5. Waschtrockner nach einem der Ansprüche 1 bis 4, **dadurch gekennzeichnet, dass** das Gebläse (6) drehbar ausgebildet ist, sodass die Prozessluftrichtung durch das drehbare Gebläse (6) adaptierbar ist.

6. Waschtrockner nach Anspruch 5, **dadurch gekennzeichnet, dass** ein Heizelement (7) zwischen dem Wärmepumpen-Kondensator (5) und dem Adsorptionsmodul (2) in Reihe geschaltet ist.

7. Waschtrockner nach Anspruch 1, **dadurch gekennzeichnet, dass** ein Heizelement (7) zwischen dem Wärmepumpen-Verdampfer (3) und dem Adsorptionsmodul (2) in Reihe geschaltet ist.

8. Waschtrockner nach einem der vorangehenden Ansprüche, **gekennzeichnet durch** einen Wäschetrommel (11)-Bypass.

9. Waschtrockner nach einem der vorangehenden Ansprüche, **dadurch gekennzeichnet, dass** das Adsorptionsmodul (2) Kieselgel aufweist.

## Claims

1. Washer-dryer comprising a suds container (1) in which a laundry drum (11) for receiving laundry is rotatably mounted, an adsorption module (2) which contains an adsorbent for receiving moisture, a fan (6) which is designed to exchange process air between the suds container (1) and the adsorption module (2), a control device which is designed to convey, by means of the fan (6), dry process air from the adsorption module (2) into the suds container (1) during a drying phase in such a way that moisture from the laundry is emitted to the process air, and to convey, by means of the fan (6), moist process air from the adsorption module (2) into the suds container (1) during a washing phase in such a way that moisture from the process air condenses on the laundry and the laundry is heated by means of condensation heat released in this condensing process, and a heat pump comprising a heat pump evaporator (3) and a heat pump condenser (5), the adsorption module (2) and the heat pump evaporator (3) and the heat pump condenser (5) being connected in series, **characterised in that** the heat pump also comprises valves (9) such that its functionality can be reversed so that, by correspondingly switching and/or activating the valves, the heat pump evaporator (3) can act as an evaporator or condenser while the heat pump condenser (5) can act as a condenser or evaporator.

2. Washer-dryer according to claim 1, **characterised in that** the adsorption module (2) is connected in series between the heat pump condenser (5) and the heat pump evaporator (3) such that the process air flowing out of the suds container (1) flows through the heat pump evaporator (3), then through the adsorption module (2) and then through the heat pump condenser (5) before being conveyed back into the suds container (1).

3. Washer-dryer according to either claim 1 or claim 2, **characterised in that** the control device is designed to convey, by means of the fan (6), dry process air from the adsorption module (2) into the suds container (1) during a drying phase in such a way that 80% of the adsorption capacity is used at the beginning of the drying phase and 20% of the adsorption capacity is used at the end of the drying phase.

4. Washer-dryer according to any of claims 1 to 3, **characterised in that** the control device is designed to activate the heat pump evaporator (3) and the heat pump condenser (5) at the end of the drying phase or throughout the drying phase.

5. Washer-dryer according to any of claims 1 to 4, **characterised in that** the fan (6) is designed to be rotatable such that the process air direction can be adapted by the rotatable fan (6).

6. Washer-dryer according to claim 5, **characterised in that** a heating element (7) is connected in series between the heat pump condenser (5) and the adsorption module (2).

7. Washer-dryer according to claim 1, **characterised in that** a heating element (7) is connected in series between the heat pump evaporator (3) and the adsorption module (2).

8. Washer-dryer according to any of the preceding claims, **characterised by** a laundry drum (11) bypass.

9. Washer-dryer according to any of the preceding claims, **characterised in that** the adsorption module (2) comprises silica gel.

## Revendications

1. Sèche-linge comportant une cuve à lessive (1), dans lequel un tambour à linge (11) est monté de manière rotative pour recevoir le linge, un module d'adsorption (2) contenant un adsorbant pour recevoir l'humidité, une soufflerie (6) conçue pour l'échange d'air de traitement entre la cuve à lessive (1) et le module d'adsorption (2), un dispositif de commande conçu pour diriger l'air de traitement sec du module d'adsorption (2) dans la cuve à lessive (1) pendant une phase de séchage au moyen de la soufflerie (6), de sorte que l'humidité provenant du linge est libérée dans l'air de traitement, et pour diriger l'air de traitement humide du module d'adsorption (2) dans la cuve à lessive (1) pendant une phase de lavage au moyen de la soufflerie (6), de sorte que l'humidité provenant de l'air de traitement est condensée sur le linge et le linge est réchauffé au moyen de la chaleur de condensation libérée lors de ce processus de condensation, et une pompe à chaleur, présentant un évaporateur de pompe à chaleur (3) et un condensateur de pompe à chaleur (5), le module d'adsorption (2) et l'évaporateur de pompe à chaleur (3) et le condensateur de pompe à chaleur (5) étant montés en série, **caractérisé en ce que** la pompe à chaleur présente en outre des soupapes (9), de sorte que sa fonctionnalité est conçue de manière inversable de sorte que, par une commutation et/ou l'activation correspondante des soupapes, l'évaporateur de pompe à chaleur (3) peut agir comme évaporateur ou comme condensateur, tandis que le condensateur de pompe à chaleur (5) peut agir comme condensateur ou évaporateur.

2. Sèche-linge selon la revendication 1, **caractérisé en ce que** le module d'adsorption (2) entre le condenseur de pompe à chaleur (5) et l'évaporateur de pompe à chaleur (3) est monté en série, de sorte que l'air de traitement sortant de la cuve à lessive (1) circule à travers l'évaporateur de la pompe à chaleur (3), puis à travers le module d'adsorption (2), et puis à travers le condenseur de la pompe à chaleur (5), avant d'être redirigé dans la cuve à lessive (1).

3. Sèche-linge selon la revendication 1 ou 2, **caractérisé en ce que** le dispositif de commande est formé pour diriger l'air de traitement sec du module d'adsorption (2) à la cuve à lessive (1) au moyen de la soufflerie (6) pendant la phase de séchage, de sorte que 80 % de la capacité d'adsorption sont utilisés au début de la phase de séchage et 20 % de la capacité d'adsorption sont utilisés à la fin de la phase de séchage.

4. Sèche-linge selon l'une des revendications 1 à 3, **caractérisé en ce que** le dispositif de commande est conçu pour activer l'évaporateur de pompe à chaleur (3) et le condensateur de pompe à chaleur (5) à la fin de la phase de séchage ou pendant toute la phase de séchage.

5. Sèche-linge selon l'une des revendications 1 à 4, **caractérisé en ce que** la soufflerie (6) est conçue de manière rotative, de sorte que la direction de l'air de traitement par la soufflerie rotative (6) est adaptable.

6. Sèche-linge selon la revendication 5, **caractérisé en ce qu'**un élément chauffant (7) est monté en série entre le condensateur de pompe à chaleur (5) et le module d'adsorption (2).

7. Sèche-linge selon la revendication 1, **caractérisé en ce qu'**un élément chauffant (7) est monté en série entre l'évaporateur de pompe à chaleur (3) et le module d'adsorption (2).

8. Sèche-linge selon l'une des revendications précédentes, **caractérisé par** un contournement du tambour à linge (11).

9. Sèche-linge selon l'une des revendications précédentes, **caractérisé en ce que** le module d'adsorption (2) présente du gel de silice.
